# EUROPEAN PATENT APPLICATION

(11) **EP 1 515 081 A2**
(43) Date of publication of application: **16.03.2005**
(21) Application number: 04000439.2
(22) Date of filing: 12.01.2004
(51) Int. Cl.: F17C 9/02

(54) **Device for controlling hydrogen flow of hydrogen storage canister**

(30) Priority: 12.09.2003 CN 03157063
(71) Applicant: Asia Pacific Fuel Cell Technologies, Ltd., Chunan, Miaoli 350 (TW)
(72) Inventor: Yang,Jefferson, YS, Asia Pacific Fuel Cell, Chunan Miaoli 350 (TW); Li, Yingjeng, James, Asia Pacific Fuel Cell, Chunan Miaoli 350 (TW)
(74) Representative: Goddar, Heinz J., Dr.

(57) **Abstract**

A control device for controlling hydrogen flow of a hydrogen storage canister accommodated in a canister containing chamber includes a heating device which is connected to a heating fuel storage tank via a heating fuel supplying pipeline for conveying a heating fuel to a catalyst bed in the canister containing chamber and generating heat by combustion of the heating fuel at the catalyst bed. A blowing device provides an air flow to the canister containing chamber. A controller controls the operation of the heating device and the blowing device in correspondence to a temperature signal detected from an internal space of the canister containing chamber. The controller is coupled with a setting unit for setting various parameters which are stored in a parameter storage unit for controlling the controller.

## Description

### BACKGROUND OF THE INVENTION

### 1. Field of the Invention

The present invention relates generally to a control device for hydrogen storage, and more particularly to a device for controlling a hydrogen flow of a hydrogen storage canister accommodated in a canister containing chamber incorporated with a catalyst bed therein.

### 2. Description of the Prior Art

A fuel cell system is a power-generating unit that generates electrical power energy through electrochemical reaction of hydrogen and oxygen. To perform electrochemical reaction, hydrogen gas and air are separately conveyed to the fuel cell system via hydrogen gas passage and air passage.

Currently, a variety of ways are available for storage of hydrogen. Hydrogen can be stored in compressed gas form as compressing hydrogen, in liquid state as liquid hydrogen or in hydride form as metal hydride. Although compressed hydrogen has high gravimetric density of hydrogen, compressing hydrogen is an expensive process and the compressed hydrogen gas still occupies a great amount of space. In addition, the high pressure of compressed hydrogen is adverse to operation safety. Similarly, liquid hydrogen has high density. However, liquidization of hydrogen is a high energy consumption process. Moreover, because liquid hydrogen must be stored in a heat insulating storage tank, it is more economical and suitable to use liquid hydrogen in a system with a large storage tank. In most applications, hydride form is the most feasible way for storing hydrogen economically. An example is the compact hydrogen storage of electrical vehicle.

Metal hydride is formed by metallic material commonly referred to as hydrogen storage alloy which is capable to adsorb and desorb hydrogen. There are a variety of metal hydrides used. The charging/discharging pressure and temperature depend on the kind of metal hydride. Also, the hydrogen storage capacity of metal hydride, i.e. the weight or volume of hydrogen that a unit weight of metal hydride can adsorb, varies from kind to kind. The conventional metal hydrides include lanthanum-nickel alloy (LaNi), iron-titanium alloy (FeTi) and magnesium (Mg) alloy, among which iron-titanium alloy is most commonly used. Some properties of iron-titanium alloy, including the hydrogen pressure, hydrogen flux and unit weight, make the iron-titanium alloy comparatively more suitable to be used in, for example, electrical vehicle than others.

The hydrogen storage capacity of magnesium alloy is larger than that of lanthanum-nickel alloy or iron-titanium alloy. In other words, for the same unit weight of alloy, magnesium alloy can store a larger amount of hydrogen than lanthanum-nickel alloy or iron-titanium alloy. However, magnesium alloy possesses a defect in practical use. Magnesium alloy is able to release a high flux of hydrogen only when the temperature is high enough e.g. at 200~300 . Therefore, it is not appropriate and inefficient to use magnesium alloy in a system that does not comprise a powerful heating device to heat up the magnesium alloy.

Generally, it is convenient and safe to use hydrogen storage alloy for storage of hydrogen in a fuel cell system. However, it should be noted that the ability of the hydrogen storage alloy to charge and discharge hydrogen directly affects the performance of the fuel cell system. Desorption of hydrogen is an endothermic process, and therefore, during discharging, the hydrogen storage alloy absorbs heat and causes a drop in temperature. The decrease of temperature in turn slows down the release of hydrogen from the hydrogen storage alloy. Therefore, in order to keep a steady performance of the fuel cell system, it is required to control the hydrogen flow from the hydrogen storage alloy by a proper control mode. In addition, it is needed to have a control device to monitor the statuses and control the operations of various components in the fuel cell system.

To maintain a steady discharging rate, heat is sufficiently and continuously provided to the hydrogen storage alloy. The conventional techniques for heating up the hydrogen storage alloy to discharge hydrogen include heating by an electrical heater or by the heat waste recirculated from the engine or the fuel cell system. In that cases, the fuel cell system is either equipped with a power supply for powering the electrical heater, or alternatively, with a heat waste re-circulator for utilizing of the heat waste. Both of the techniques are limited to use in some applications. Practically, the use of the electrical heater consumes a substantial amount of power and raises the operation cost. Besides, the heating rate is not fast enough. The heating devices currently available are not capable to heat up rapidly to a high temperature. On the other hand, the temperature of the heat waste from the proton exchange membrane fuel cell system is usually below 100 which is not hot enough for heating up the magnesium alloy based hydrogen storage alloy.

Moreover, for a fuel cell system that includes a heating device for heating the hydrogen storage alloy, it is superior for the fuel cell system to be further equipped with a control device to moderately monitor the statuses and control the normal operation of components.

### SUMMARY OF THE INVENTION

Thus, a primary object of the present invention is to provide a control device for controlling hydrogen flow from hydrogen storage canisters. By means of the control device, the release of hydrogen from the hydrogen storage canister at discharging can be moderately controlled.

Another object of the present invention is to provide a heating device with high performance for hydrogen storage canisters. The heating device generates heat by combustion of methanol in a catalyst bed, such that the hydrogen storage canisters can be heated efficiently in short time, and the discharging rate of hydrogen from the hydrogen storage canisters can be regulated.

To achieve the above objects, in accordance with the present invention, there is provided a device for controlling hydrogen flow of hydrogen storage canisters by regulating the temperature of the hydrogen storage canisters. The control device comprises a heating device which is connected to a heating fuel storage tank via a heating fuel supplying pipeline for conveying a heating fuel to a catalyst bed in the canister containing chamber and generating heat by combustion of the heating fuel at the catalyst bed. A blowing device provides an air flow to the canister containing chamber. A controller controls the operation of the heating device and the blowing device in correspondence to a temperature signal detected from an internal space of the canister containing chamber. The controller is coupled with a setting unit for inputting various parameters for controlling the controller and a parameter storage unit for storing the parameters.

### BRIEF DESCRIPTION OF THE DRAWINGS

The present invention will be apparent to those skilled in the art by reading the following description of preferred embodiments thereof, with reference to the attached drawings, in which:

**Figure 1** is a schematic view showing an arrangement of a control device for controlling hydrogen flow of hydrogen storage canisters in accordance with a preferred embodiment of the present invention;

**Figure 2** is a circuit block diagram of the control device of Figure 1; and

**Figure 3** is a flowchart of the present invention.

### DETAILED DESCRIPTION OF THE PREFERRED EMBODIMENTS

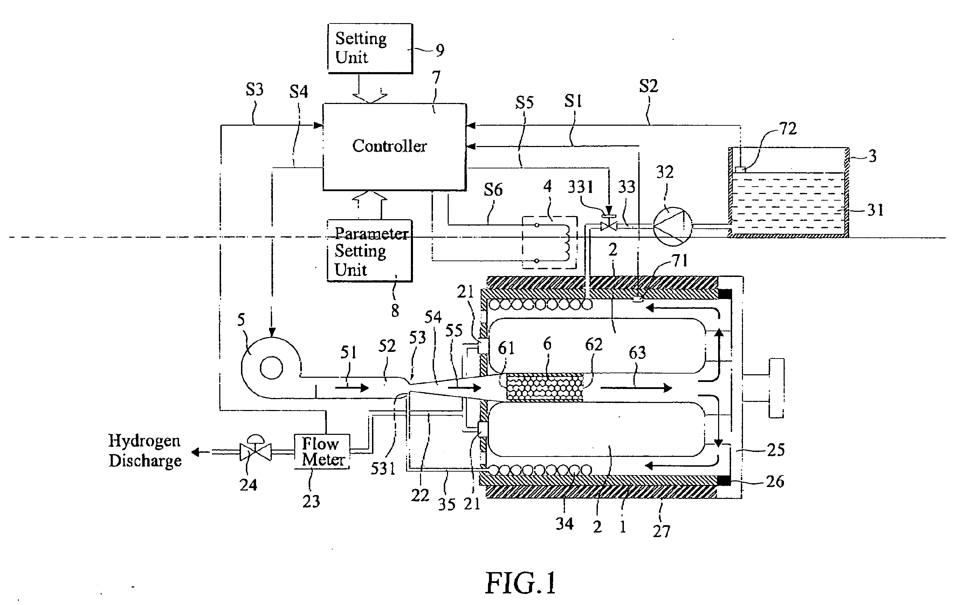

With reference to the drawings and in particular to **Figure 1**, a control device for controlling hydrogen flow of hydrogen storage canisters in accordance with a preferred embodiment of the present invention is shown. The control device comprises a canister containing chamber **1** that is formed with an internal space for accommodation of e.g. two hydrogen storage canisters **2** therein. Each hydrogen storage canisters **2** is coupled to one end of a hydrogen supplying pipeline **22** by means of a connecting member **21**. The connecting member **21** secures the connection between the hydrogen storage canister **2** and the hydrogen supplying pipeline **22** by means of conventional linkage such as engagement, fastening, screwing or pressing.

The hydrogen supplying pipeline **22** comprises a flow meter **23** for measuring a flow rate of hydrogen discharging from the hydrogen storage canisters **2**, and a pressure regulating valve **24** for regulating the pressure of hydrogen released from the hydrogen supplying pipeline **22**.

The other end of the canister containing chamber **1** is covered by a cover **25** to form a closed end. When hydrogen in any hydrogen storage canister **2** is used up, the cover **25** is removed such that the hydrogen storage canister **2** can be dismounted and taken out from the canister containing chamber **1** and replaced with a new hydrogen storage canister **2**. A packing ring **26** is sandwiched between the cover **25** and the canister containing chamber **1**. Moreover, a heat insulating layer **27** may be formed on the outer surface of the canister containing chamber **1** to keep the temperature of the canister containing chamber **1**.

The heating device also comprises a heating fuel storage tank **3** for storage of a heating fuel **31** such as methanol. The heating fuel **31** is supplied to a heating fuel supplying pipeline **33** by a pump **32**. A coiled pipe **34** winds around an inner surface of the canister containing chamber **1**. One end of the coiled pipe **34** is connected to the heating fuel supplying pipeline **33** for conveying the heating fuel **31** therefrom.

Preferably, the heating fuel supplying pipeline **33** is equipped with a pre-heating device **4** at a section preceding the canister containing chamber **1**. The pre-heating device **4** may be an electrical heater. By means of the pre-heating device **4**, the heating fuel **31** supplied by the heating fuel storage tank **3** is pre-heated when it flows through the heating fuel supplying pipeline **33** to the coiled pipe **34**.

Also, the heating device **1** comprises a blowing device **5** for supplying an air flow **51**. An outflow end of the blowing device **5** is connected to an inflow end of a nozzle section **53** via an air flow leading pipe **52** to convey the air flow **51** to the nozzle section **53**. Then, the air flow **51** sprays out from an outflow end of the nozzle section **53** to a heating gas drawing pipe **54** which is communicated with a heating gas inflow end **61** of a catalyst bed **6**. The catalyst bed **6** is arranged in the internal space of the canister containing chamber **1**. In the embodiment, the catalyst bed **6** is disposed between two hydrogen storage canisters **2**.

The nozzle section **53** is also connected with a heating fuel inlet **531** which is communicated with a heating fuel supplying conduit **35**. The heating fuel supplying conduit **35** is connected with the coiled pipe **34** connecting to the heating fuel pipeline **33**.

Because the dimension of the passage of the nozzle section **53** is smaller than that of the air flow leading pipe **52**, when air flow **51** flows from the air flow leading pipe **52** to the nozzle section, it has a pressure drop at the nozzle section **53**. In other words, the nozzle section **53** has a lower pressure. Thereby, the heating fuel **31** in the heating fuel supplying conduit **35** is sucked to the nozzle section **53**. Subsequently, the heating fuel **31** is mixed with the air flow and atomized to form a heating gas **55**.

The heating gas **55** is conveyed through the heating gas drawing pipe **54** to the heating gas inflow end **61** of the catalyst bed **6**. The heating gas **55**, which comprises the heating fuel and air, is catalyzed by the catalyst bed **6** to combust and generate a hot gas **63** that flows around the internal space of the canister containing chamber **1**. The canister containing chamber **1** is provided with at least one through hole 11 serving as a hot gas guiding outlet for the hot gas 63. Thereby, the hydrogen storage canisters **2** contained in the canister containing chamber **1** is heated. Moreover, when the hot gas **63** flows through the gap between the hydrogen storage canisters **2** and the inner surface of the canister containing chamber **1**, it heats up the heating fuel **31** in the coiled pipe **34**. Accordingly, the heating fuel **31** such as methanol is completely vaporized in the coiled pipe **34.**

The canister containing chamber **1** may also comprise a hot gas re-circulating device either for reuse of the hot gas that contains incompletely burnt fraction or for utilization of heat waste. Moreover, the canister containing chamber **1** may further comprise an exhausted gas processing device for processing the hot gas that contains incompletely burnt substances. The exhausted gas processing device is similar to the catalyst converter of vehicle and able to reduce pollution.

The operations of the various components mentioned are controlled by a controller **7**. The controller **7** is connected with a parameter storage unit **8** for storage of various parameters and a setting unit **9** for inputting of the parameters.

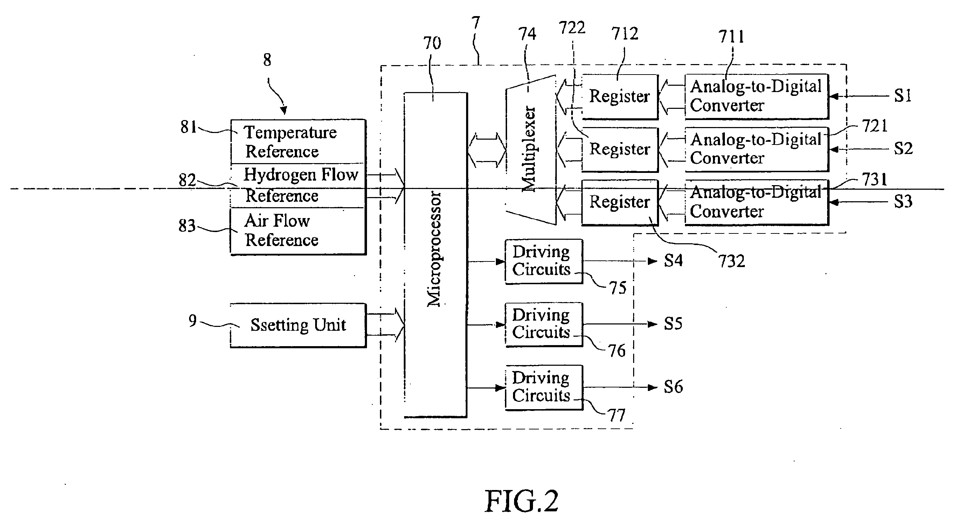

**Figure 2** is a circuit block diagram of the controller. The controller is described with reference to **Figs. 1** and **2** below.

The controller **7** is coupled with a temperature sensor **71** which is mounted in the canister containing chamber **1** for detecting an internal temperature of the canister containing chamber **1**. The temperature sensor **71** generates a temperature signal S**1** to the controller **7.** The temperature signal S**1** is transmitted via an analog-to-digital converter **711** and a register **712** to a multiplexer **74** which forwards the temperature signal S**1** to a microprocessor **70.**

The controller **7** is also coupled to a heating fuel level detector **72** which is disposed at the heating fuel storage tank 3 for detecting a stock of the heating fuel **31** such as methanol and generating a heating fuel stock signal S**2**. The heating fuel stock signal S**2** is transmitted via an analog-to-digital converter **721** and a register **722** to the multiplexer **74** which forwards the heating fuel stock signal S**2** to the microprocessor **70**.

Moreover, the controller **7** is coupled to the flow meter **23** in the hydrogen supplying pipeline **22** for receiving a hydrogen flow signal S**3** from the flow meter **23**. The hydrogen flow signal S**3** is transmitted via an analog-to-digital converter **731** and a register **732** to the multiplexer **74** which forwards the heating fuel flow signal S**3** to the microprocessor **70**.

The controller **7** comprises a plurality of driving circuits **75, 76, 77**. The microprocessor **70** of the controller **7** transmits an air flow control signal S**4** via the driving circuit **75** to the blowing device **5** for controlling the air flow of the blowing device **5**.

In addition, the microprocessor **70** transmits a heating fuel supply signal S**5** via the driving circuit **76** to a control valve **331** mounting to the heating fuel supplying pipeline **33**. The control valve **331** is driven to supply of heating fuel **31** by the microprocessor **70.** Preferably, the control valve **331** is a proportion integral derivative valve (PID) which may be operated in a proportional operation mode and is able to control the flow of the heating fuel **31** precisely.

The microprocessor **70** also transmits a pre-heating control signal S**6** via the driving circuit **77** to control the pre-heating of the heating fuel **31** by the pre-heating device **4.** By means of the heating device **4**, the heating fuel **31** in the heating fuel supplying pipeline **33** is heated by the heating device **4** before flowing to the coiled pipe **34**.

The parameter setting unit 9 is coupled to the microprocessor **70** of the controller **7** for providing various parameters for controlling. The parameters include for example a temperature reference **81**, a hydrogen flow reference **82**, an air flow reference **83** and so on. The setting unit **9** is coupled to the microprocessor **70** for setting of various parameters for storage in the parameter storage unit **8**.

The controller **7** controls the temperature of the hydrogen storage canisters **2** by heating or cooling the hydrogen storage canisters **2** in accordance with the operation requirements. Take for an example. When it is needed to cool the hydrogen storage canisters **2**, the controller **7** drives the blowing device **5** to generate the air flow **51** and supply it to the internal space of the canister containing chamber **1** through the air flow leading pipe **52**, the nozzle section **52** and the heating gas drawing pipe **54** in sequence.

When it is needed to heat the hydrogen storage canisters **2**, the controller **7** drives the blowing device **4** to generate and supply the air flow **51** through the air flow leading pipe **52** to the nozzle section **53**. Meanwhile, the pump **32** draws the heating fuel **31** from the heating fuel storage tank **3** to the heating fuel supplying pipeline **33**. The heating fuel **31** is pre-heated by the pre-heating device **4** when flowing through the heating fuel supplying pipeline **33.**

Subsequently, the heating fuel **31** is conveyed through the coiled pipe **34** and the heating fuel supplying conduit **35** to the heating fuel inlet **531** at the nozzle section **53.** The heating fuel **31** is heated by the hot gas **63** from the catalyst bed **6** when the heating fuel **31** is conveyed through the coiled pipe **34**.

As the air flow **51** passes through the nozzle section **53**, it sucks in the heating fuel **31** from the heating fuel inlet **531** to the nozzle section **53**, forming the atomized heating gas **55** that flows through the heating gas drawing pipe **54** to the catalyst bed **6**. The heating gas **55** is combusted in the catalyst bed **6** and generates the hot gas **63**.

Finally, the hot gas **63** is guided to flow around the internal space of the canister containing chamber **1** and heat the hydrogen storage canisters **2**. As mentioned, the exhausted hot gas may be recirculated by means of a hot gas recirculating device to reuse the incompletely burnt fraction or to utilize the heat waste. The hot gas recirculating device resembles the catalyst converter of vehicle and is able to reduce pollution.

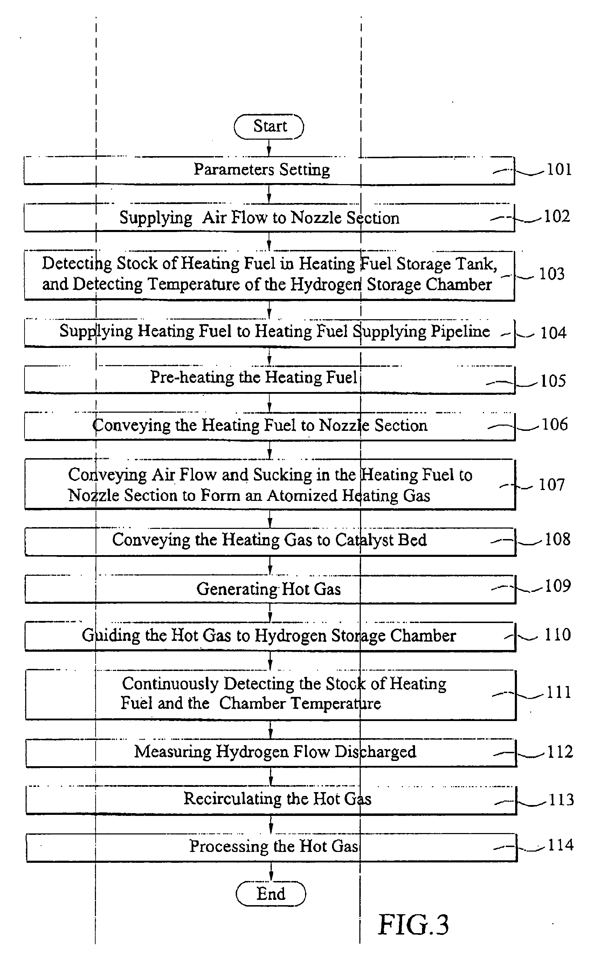

Please refer to **Figure 3** which is a flowchart of the present invention. Firstly, various control parameters are set in step **101**. In step **102**, air is drawn in by the blowing device **5** to generate an air flow **51** which is conveyed to the nozzle section **53** via the air flow leading pipe **52**.

Meanwhile, the controller **7** detects the stock of the heating fuel **31** in the heating fuel storage tank **3** and also the internal temperature of the canister containing chamber **1** in step **103**. If the stock of heating fuel **31** in the heating fuel storage tank **3** is normal, the controller **7** would drive the control valve **331** to operate, and the pump **32** draws the heating fuel **31** from the heating fuel storage tank **3** into the heating fuel supplying pipeline **33** in step **104.**

In step **105**, the pre-heating device **33** is driven to heat the heating fuel **31** flowing through the heating fuel supplying pipeline **33**.

Then, the heating fuel **31** is conveyed through the coiled pipe **34** and the heating fuel supplying conduit **35** to the heating fuel inlet **531** at the nozzle section **53** in step **106**.

The air flow **51** flows through the nozzle section **53** and sucks in the heating fuel **31** from the heating fuel inlet **531** to the nozzle section **53**, forming the atomized heating gas **55** in step **107**. The heating gas **55** is conveyed to the catalyst bed **6** in step **108** and combusted therein to generate the hot gas **63** in step **109**.

Subsequently, the hot gas **63** is guided to flow around the internal space of the canister containing chamber **1** and heats up the hydrogen storage canisters **2** in step **110**. At the same time, the controller **7** continuously detects the stock of heating fuel **31** in the heating fuel storage tank **3** and the internal temperature of the canister containing chamber **1** in step **111** so as to regulate the hydrogen flow from the hydrogen storage canisters **2**. In step **112**, the controller **7** measures the hydrogen flow in the hydrogen supplying pipeline **22** from the hydrogen storage canisters **2** by the flow meter **23**.

In step **113**, the hot gas **63** is exhausted and re-circulated by a hot gas re-circulating device such that the incompletely burnt fraction in the hot gas is reused. Of course, the hot gas may be further processed by an exhausted gas processing device to eliminate the incompletely burnt substances in the hot gas in step **114**.

From the described embodiment, it is noted that the device and method for heating the hydrogen storage canisters are novel and very practical. Although the present invention has been described with reference to the preferred embodiment thereof, it is apparent to those skilled in the art that a variety of modifications and changes may be made without departing from the scope of the present invention which is intended to be defined by the appended claims.

## Claims

1. A control device for controlling a hydrogen flow from at least one hydrogen storage canister accommodated in a canister containing chamber, comprising:
a heating device, which is supplied with a heating fuel by a heating fuel supplying pipeline in communication with a heating fuel storage tank for heating up the canister containing chamber;
a blowing device, for providing an air flow via an air flow leading pipe to the canister containing chamber;
at least one temperature sensor, for detecting an internal temperature of the canister containing chamber and generating a temperature signal; and
a controller with a microprocessor for controlling the heating device and the blowing device in correspondence to the temperature signal generated by the temperature sensor, and thereby controlling the hydrogen flow discharged from the hydrogen storage canisters via a hydrogen supplying pipeline.

2. The control device as claimed in Claim 1, wherein the microprocessor is further coupled with a parameter storage unit for storage of at least one parameter.

3. The control device as claimed in Claim 2, wherein the parameters stored in the parameter storage unit comprises a temperature reference, a hydrogen flow reference and an air flow reference.

4. The control device as claimed in Claim 1, wherein the microprocessor is further coupled with a setting unit for setting at least one parameter to be stored in the parameter storage unit.

5. The control device as claimed in Claim 1, further comprising a pre-heating device for pre-heating the heating fuel in the heating fuel supplying pipeline.

6. The control device as claimed in Claim 1, further comprising a heating fuel level detector for detecting a stock of the heating fuel in the heating fuel storage tank and generating a heating fuel stock signal to the microprocessor.

7. The control device as claimed in Claim 1, wherein the heating fuel is methanol.

8. The control device as claimed in Claim 1, wherein the heating fuel supplying pipeline further comprises a control valve which is driven by the microprocessor to regulate the heating fuel supplied to the heating device.

9. The control device as claimed in Claim 8, wherein the control valve is a proportion integral derivative valve.

10. The control device as claimed in Claim 1, wherein the hydrogen supplying pipeline further comprises a flow meter for detecting the hydrogen flow of the hydrogen flowing in the hydrogen supplying pipeline.

11. The control device as claimed in Claim 1, wherein the microprocessor transmits an air flow control signal via a driving circuit to the blowing device for controlling the air flow.

12. The control device as claimed in Claim 1, wherein the heating device comprises:
a catalyst bed, arranging in the inner space of the canister containing chamber, having a heating gas inflow end and a heating gas outflow end; and
a nozzle section, which has an inflow end in communication with the air flow leading pipe for conveying the air flow into the nozzle section, an outflow end in communication with a heating gas drawing pipe connecting to the heating gas inflow end of the catalyst bed, and a heating fuel inlet connecting to the heating fuel supplying pipeline;
wherein when the air flow flows through the nozzle section, the heating fuel in the heating fuel supplying pipeline is sucked into the nozzle section to mix with the air flow forming an atomized heating gas, the atomized heating gas being further supplied via the heating gas drawing pipe to the catalyst bed to generate a hot gas, so that the hydrogen storage canister contained in the canister containing chamber is heated to discharge hydrogen.

13. The control device as claimed in Claim 12, wherein the heating device further comprises a coiled pipe around an inner surface of the canister containing chamber, one end of the coiled pipe being connected to the heating fuel supplying pipeline and the other end being connecting to a heating fuel inlet at the nozzle section, such that the heating fuel is conveyed from the heating fuel supplying pipeline via the coiled pipe and the nozzle section to the catalyst bed where the heating fuel is combusted to generate a hot gas for heating the heating fuel in the coiled pipe.
